# EUROPEAN PATENT SPECIFICATION

(11) **EP 3 388 727 B1**
(45) Date of publication and mention of the grant of the patent: **20.11.2019**
(21) Application number: 18167374.0
(22) Date of filing: 13.04.2018
(51) Int. Cl.: F16L 37/091, F16L 37/14

(54) **CONNECTING ASSEMBLY FOR A HEATING AND/OR AIR CONDITIONING SYSTEM**
VERBINDUNGSANORDNUNG FÜR KÄLTE-KLIMAANLAGE
ASSEMBLAGE DE CONNEXION POUR UN SYSTÈME DE CHAUFFAGE ET/OU D'AIR CONDITIONÉ

(30) Priority: 13.04.2017 IT 201700041522
(43) Date of publication of application: 17.10.2018
(73) Proprietor: Pres-Block S.P.A., 10040 Caselette (IT)
(72) Inventor: MONTAGONO, Massimiliano, 10091 Alpignano (TO) (IT)
(74) Representative: D'Angelo, Fabio

(56) References cited:
- EP-A2- 2 615 348
- GB-A- 2 486 004
- US-A1- 2012 056 420
- US-A1- 2013 142 492

## Description

### PRIORITY CLAIM

This application claims priority from Italian Patent Application No. 102017000041522 filed on April 13, 2017.

The present invention relates to a connecting assembly for the connection of a tube of a heating and/or air conditioning system to a tubular component of the same system.

Systems of the aforementioned type are known, which are provided with tubes connected on one side to an outlet manifold (or supply manifold), which in turn is connected to a heat exchanger, for example a boiler, and on the other side to a return manifold, also connected, for example, to the boiler.

In systems of the aforesaid type, the tubes for the circulation of the heating and/or air conditioning liquid, generally water, are often placed in the ceiling or the floor.

Each tube is connected, at one end portion thereof, to a corresponding connecting assembly that must then be coupled to a corresponding pipe union carried by the supply or return manifold; this tube is then laid on a layer of insulating material fixed to the ceiling or the floor.

The tubes are generally made of a reinforced plastic material, often cross-linked polyethylene, having a low coefficient of expansion, while the two manifolds are generally made of metal.

Patent application No. EP-B-2202441, in the name of the same applicant, discloses a connecting assembly of the type mentioned above for the connection of a tube to a manifold, comprising:
- a first tubular element adapted to be fixed to a pipe union of the aforesaid manifold;
- a second tubular element adapted to be sealingly engaged on the first tubular element by means of a male - female coupling; and
- a sleeve which can also be coupled to the first tubular element and is suitable to accommodate one end of the tube by abutment in an annular seat.

The first and second tubular elements are fixed in a predetermined axial position by means of a bayonet coupling system.

In particular, in use, the sleeve is housed completely inside the first tubular element, while the second tubular element is partly mounted inside the first tubular element itself and partly protrudes axially from the latter.

The sleeve is formed by two concentric cylindrical walls joined, at one axial end, by an annular rib and defining the above mentioned annular seat for the insertion of the tube. In particular, the annular rib defines an axial abutment surface for the tube. Moreover, the innermost cylindrical wall of the sleeve protrudes axially with respect to the outermost cylindrical wall, on the opposite side with respect to that of the annular rib.

The connecting assembly further comprises a ring clamp, arranged axially inside the first tubular element and facing the portion of the innermost cylindrical wall of the sleeve projecting axially with respect to the other cylindrical wall; this clamp has an inner zone in the form of elastic tabs, which engage the outer surface of the tube entering the annular seat of the sleeve, so as to prevent the extraction thereof in the opposite direction. In greater detail, the clamp has a slightly truncated-conical shape, with the smaller section facing the annular rib of the sleeve.

The connecting assembly also comprises a sealing ring of elastic material, radially interposed between the first tubular element and the portion of the innermost cylindrical wall of the sleeve projecting axially with respect to the other cylindrical wall, so as to ensure, in use, the seal between the connecting assembly and the tube.

The connecting assembly finally comprises a ring spacer axially interposed between the clamp and the sealing ring.

In the known solution described above, the abutment of the tube against the annular rib of the sleeve is the only guarantee of a correct connection between the tube and the connecting assembly. This solution is expensive and has several complications, as it requires the production, management and assembly of three components. Moreover, the internal geometry of the tubular elements and sleeve forming the connecting assembly mentioned above is of considerable complexity. Patent application EP-A2-2615348 discloses a connecting assembly comprising visibility zone, see for instance the portion 204a, figure 9 and the paragraph [0088] of the description. Patent application GB-A-2486004 discloses a connecting assembly comprising transparent engaging portions 12 and 14, figure 2, and as described in the description page 1, lines 13 to 20.

It is an object of the present invention to provide a connecting assembly for a heating and/or air conditioning system, which is highly reliable and cost-effective, and allows at least some of the above-mentioned drawbacks related to connecting assemblies of the known type to be obviated.

According to the invention, this object is achieved by means of a connecting assembly for the connection of a tube of a heating and/or air conditioning system to a tubular component of the same system, said connecting assembly having an axis and comprising:
- a sleeve defining an axially receiving seat for said tube and coaxially carrying therein at least one sealing ring and one retaining ring clamp, adapted to cooperate in use with said tube to prevent the extraction thereof from the sleeve itself;
- a tubular element fixable to said tubular component and axially coupled in use to said sleeve; and
- locking means for fixing said tubular element to said sleeve in a predetermined position along said axis;
characterised in that said sleeve has, at least within the proximity of said clamp, at least one visibility zone to allow the external vision of the interaction position between said tube and said clamp during the assembly step; and in that said locking means comprise a fixing element, which can be coupled in a releasable manner to said sleeve and said tubular element in a transverse direction with respect to said axis.

For a better understanding of the present invention, a preferred, non-limiting embodiment thereof will be described below purely by way of example and with the aid of the accompanying drawings, wherein:
- Figure 1 is an axial sectional view of a connecting assembly according to the present invention for a heating and/or air conditioning system;
- Figure 2 is a side view of the connecting assembly of Figure 1;
- Figure 3 is an exploded perspective view of an assembly comprising the connecting assembly of Figures 1 and 2 on a reduced scale and an end portion of a tube of the heating and/or air conditioning system.

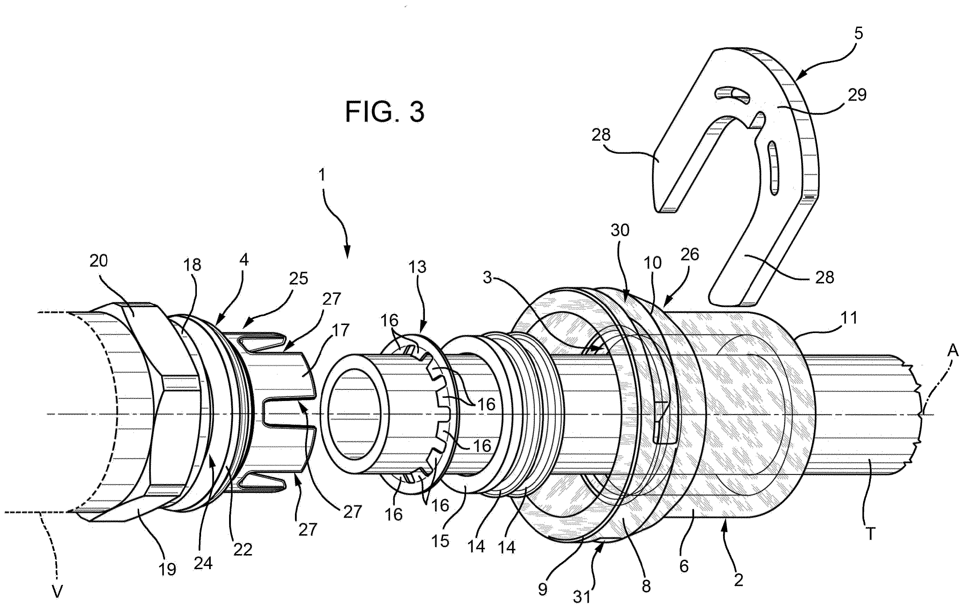

With reference to the accompanying figures, reference numeral 1 indicates, as a whole, a connecting assembly for the connection of a tube T of a heating and/or air conditioning system (known per se and not illustrated) to a tubular component V (Figure 3), in the specific example a manifold of the same system.

The connecting assembly 1 has an axis A and comprises:
- a sleeve 2 defining a seat 3 for axially receiving the tube T;
- a tubular element 4 fixable (in a known manner) to the tubular component V and axially coupled in use to the sleeve 2; and
- a fixing clip 5 for fixing the tubular element 4 to the sleeve 2 in a predetermined position along the axis A.

In particular, the sleeve 2 comprises:
- a first cylindrical portion 6 adapted to axially receive the tube T through an end opening 7 coaxial with the axis A;
- a second cylindrical portion 8, defining one end 9 of the sleeve 2, opposite to the opening 7, and having a larger diameter than the cylindrical portion 6; and
- a connecting portion 10, with a substantially truncated cone shape, axially connecting the cylindrical portions 6 and 8.

In particular, the cylindrical portion 6 has at one of its ends 11 a raised annular edge 12 projecting radially towards the inside of the sleeve 2 and bounding the opening 7.

The sleeve 2 coaxially carries internally:
- a retaining ring clamp 13, adapted to cooperate in use with the tube T to prevent the extraction thereof from the sleeve 2 itself;
- one or more sealing rings 14, two in the example shown; and
- a ring spacer 15 interposed between the clamp 13 and the sealing rings 14.

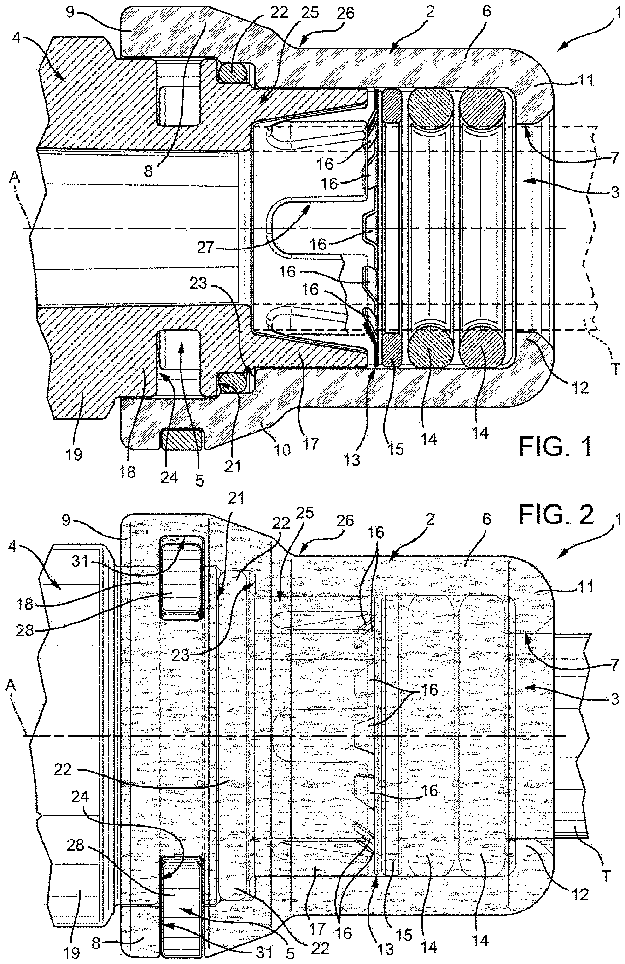

As can be seen in Figures 1 and 2, on the side of the opening 7, the sealing rings 14 are retained inside the sleeve 2 by the annular edge 12, which defines an axial abutment for the sealing rings 14 themselves.

The clamp 13 has a plurality of elastic tabs 16 evenly angularly spaced from one another about said axis A and having a slightly truncated-conical shape, with the smaller section facing the end 9 of the sleeve 2, so as to allow the sliding of the tube T coaxially with the clamp 13 itself in one direction, more specifically towards the aforesaid end 9, and so as to prevent the extraction of the tube T in the opposite direction, i.e. towards the opening 7.

The tubular element 4 comprises:
- a first substantially cylindrical annular sector 17, adapted to engage, in use, a part of the cylindrical portion 6 of the sleeve 2 adjacent to the connecting portion 10, facing the clamp 13;
- a second annular sector 18, also substantially cylindrical, adapted to engage the connecting portion 10 of the sleeve 2; and
- a third annular sector 19, projecting in use outside the sleeve 2 and forming a prismatic-, for example hexagonal-section end 20, in order to allow the fastening of the entire connecting assembly 1 to the tubular component V by means of a suitable spanner, in a known manner.

In particular, the free end of the annular sector 17 is arranged in use in the vicinity of the clamp 13 and defines an axial abutment surface for the latter, thus preventing it from coming out of the connecting assembly 1.

In practice, the assembly formed by the clamp 13, the sealing rings 14 and the spacer 15 is retained inside the sleeve 2 on one side by the annular edge 12 and on the opposite side by the annular sector 17 of the tubular element 4.

The annular sector 18 defines an axial annular shoulder 21, in which, in use, a sealing ring 22 is housed; this shoulder 21 axially adjusts the sealing ring 22 and pushes it in abutment against an annular rib 23 formed on an inner surface of the connecting portion 10 of the sleeve 2.

The annular sector 18 also comprises an annular groove 24, the function of which will be explained below.

The annular segments 17 and 18 together define an engaging portion 25 for the engagement of the tubular element 4 in the sleeve 2.

In the same way, the cylindrical portion 8, the connecting portion 10 and the part of the cylindrical portion 6 receiving the annular sector 17 together define an engaging portion 26 of the sleeve 2 which can be coupled to the engaging portion 25 of the tubular element 4.

In the case shown, the engaging portion 26 of the sleeve 2 receives therein the engaging portion 25 of the tubular element 4.

According to a possible alternative, not shown, the engaging portion 26 could arrange itself inside the engaging portion 25.

According to an important aspect of the present invention, the sleeve 2 has, at least in the vicinity of the clamp 13, at least one visibility zone to allow the external vision of the interaction position between the tube T and the clamp 13 itself during the assembly step.

Preferably, the aforesaid visibility zone is obtained by making the sleeve 2, entirely or at least in the part close to the clamp 13, with transparent material. In the illustrated example, the entire sleeve 2 is made of transparent material.

According to a possible alternative, not shown, the aforesaid visibility zone could be obtained by creating one or more windows on the sleeve 2 in the vicinity of the clamp 13.

In the preferred embodiment of the present invention illustrated in the accompanying figures, the annular sector 17 of the tubular element 4 is provided with a plurality of windows 27, which together with the transparency of the sleeve 2 allow the operator to visually confirm the successful clamping of the outer surface of the tube T by the clamp 13.

According to a further possible alternative, not shown, the sleeve 2 could be made transparent only in the engaging portion 26.

As can be seen in the attached figures, the windows 27 have a C-shaped profile with an opening in the direction of the clamp 13, and are preferably angularly evenly spaced around the axis A.

The fixing clip 5 has a U shape and can be coupled, orthogonally to the axis A, to both the engaging portions 25, 26 of the tubular element 4 and the sleeve 2, respectively.

In particular, the fixing clip 5 comprises two arms 28 parallel to one another and a crosspiece 29 substantially shaped like an arc of a circle, which connects the two arms 28.

The fixing clip 5 is movable between a locking configuration (Figures 1 and 2), in which it engages the annular groove 24 of the tubular element 4 and respective through slots 30, 31 formed on the cylindrical portion 8 of the sleeve 2, and a release configuration (Figure 3), in which it is extracted from the connecting assembly 1.

One of these slots, referred to as 30, allows both arms 28 of the fixing clip 5 to enter the connecting assembly 1, is radially aligned with the groove 24 of the tubular element 4 and is adapted to accommodate the crosspiece 29 in the locking configuration of the fixing clip 5 itself; two other slots, referred to as 31, are arranged on opposite sides of the slot 30 on the cylindrical portion 8, have a reduced angular extension with respect to that of the slot 30 and receive, in the locking configuration, the free ends of the arms 28.

In use, the fixing of the tube T to the connecting assembly 1 is carried out starting from an initial condition of the connecting assembly 1 itself, in which the tubular element 4 is fixed to the tubular component V, and the sleeve 2 is axially coupled to the tubular element 4 and fixed to the latter by means of the fixing clip 5 arranged in the locking configuration. In this condition, the clamp 13, the sealing rings 14 and the spacer 15 are housed inside the cylindrical portion 6 of the sleeve 2 and arranged between the annular edge 12 and the free end of the annular sector 17 of the tubular element 4.

The tube T is simply inserted coaxially inside the seat 3 of the sleeve 2 through the opening 7.

The tabs 16 of the clamp 13 let the tube T slide in its axial movement towards the tubular element T, but thanks to their shape, prevent the extraction thereof in the opposite direction.

Through the transparency of the sleeve 2 and the windows 27 of the tubular element 4, the operator can visually check the successful engagement of the tube T with the tabs 16 of the clamp 13.

Disassembly of the connecting assembly 1 is relatively simple, since it is sufficient to extract the fixing clip 5 first of all from the slots 31 by simple pressure and subsequently from the slot 30; at this point, the sleeve 2 is axially separable from the tubular element 4 and allows the operator to access the clamp 13 in order to cut it and release the tube T.

The advantages enabled by the connecting assembly 1 manufactured according to the present invention will be apparent from an examination of the features thereof.

In particular, thanks to the transparency of the sleeve 2 and the windows of the tubular element 4, the correct clamping of the tube T to the clamp 13 of the connecting assembly 1 can be checked very simply, without the need to resort to complex solutions with a large number of components.

In the event of errors, the sleeve 2 can be easily separated from the tubular element 4 by means of a simple radial extraction of the fixing clip 5, thereby allowing the tube T to be released from the clamp 13. At this point, by replacing the clamp 13, the tube T can again be inserted in the connecting assembly 1, re-assembled in the condition of coupling of the sleeve 2 to the tubular element 4. Any scratches on the outer surface of the tube T deriving from a previous incorrect assembly do not result in leakage, in use, thanks to the arrangement of the sealing rings 14 upstream of the clamp 13 in the direction of insertion of the tube T itself.

Disassembly of the tube T from the connecting assembly 1 does not require the cutting of the tube and the subsequent insertion of extensions or additional elements to compensate for the reduction in length. This is particularly important in cases where, due to an error, the tubes T to be fitted on the connecting assembly 1 are mixed up.

Finally, the coupling between the sleeve 2 and the tubular element 4 can occur in any reciprocal angular position of the two components, therefore the operation is very simple, as it does not require rotations.

It is clear that the connecting assembly 1 described and illustrated herein can be subject to modifications and variations without however departing from the scope of protection defined by the claims.

## Claims

1. A connecting assembly (1) for the connection of a tube (T) of a heating and/or air conditioning system to a tubular component (V) of the same system, said connecting assembly (1) having an axis (A) and comprising:
- a sleeve (2) defining a seat (3) for axially receiving said tube (T) and coaxially carrying therein at least one sealing ring (14) and one retaining ring clamp (13), adapted to cooperate in use with said tube (T) to prevent the extraction thereof from the sleeve (2) itself;
- a tubular element (4) fixable to said tubular component (V) and axially coupled in use to said sleeve (2); and
- locking means (5) for fixing said tubular element (4) to said sleeve (2) in a predetermined position along said axis (A);
wherein said sleeve (2) has, at least within the proximity of said clamp (13), at least one visibility zone to allow the external vision of the interaction position between said tube (T) and said clamp (13) during the assembly step; wherein said locking means comprise a fixing element (5) which can be coupled in a releasable manner to said sleeve (2) and said tubular element (4) in a transverse direction with respect to said axis (A); wherein said tubular element (4) and said sleeve (2) have respective engaging portions (25, 26) reciprocally penetrating one another in an axial direction, and wherein one (26) of said engaging portions (25, 26) is transparent and the other (25) of said engaging portions (25, 26) is provided with at least one window (27); said engaging portion (26) of said sleeve (2) defining said visible zone.

2. The connecting assembly according to claim 1, wherein said clamp (13) is placed downstream of said sealing ring (14) in the axial direction extending from said sleeve (2) to said tubular element (4).

3. The connecting assembly according to any one of the preceding claims, wherein said clamp (13) has a truncated cone shape with the smaller section placed on the opposite side with respect to the side where said tube (T) is inserted within said sleeve (2); said clamp (13) being provided with a plurality of tabs (16) evenly angularly spaced from one another about said axis (A) and adapted to clamp the outer surface of said tube (T) to prevent the extraction thereof from said sleeve (2).

4. The connecting assembly according to any one of the preceding claims, wherein said clamp (13) is made of metal.

5. The connecting assembly according to any one of the preceding claims, wherein said engaging portion (26) of said sleeve (2) is placed radially outer than said engaging portion (25) of said tubular element (4) and receives it internally.

6. The connecting assembly according to any one of the preceding claims, wherein said engaging portion (26) of said sleeve (2) is transparent and said engaging portion (25) of said tubular element (4) is provided with said window (27).

7. The connecting assembly according to any one of the preceding claims, wherein said sleeve (2) is completely transparent.

8. The connecting assembly according to any one of the preceding claims, wherein said sleeve (2) and said tubular element (4) are made of plastic material.

9. The connecting assembly according to any one of the preceding claims, wherein said sleeve (2) coaxially carries internally a ring spacer (15) axially interposed between said sealing ring (14) and said clamp (13).

## Patentansprüche

1. Eine Verbindungsanordnung (1) zum Verbinden eines Rohres (T) einer Heizungs- und/oder Klimaanlage mit einer rohrförmigen Komponente (V) derselben Anlage, wobei die besagte Verbindungsanordnung (1) eine Achse (A) aufweist und umfasst:
- eine Hülse (2), die einen Sitz (3) zur axialen Aufnahme des besagten Rohres (T) definiert und koaxial mindestens einen Dichtring (14) und eine Halteringklemme (13) darin trägt, die im Gebrauch mit dem besagten Rohr (T) zusammenwirken können, um dessen Herausziehen aus der Hülse (2) selbst zu verhindern;
- ein rohrförmiges Element (4), das an der besagten rohrförmigen Komponente (V) fixierbar und im Gebrauch axial mit der besagten Hülse (2) gekoppelt ist; und
- Verriegelungsmittel (5) zum Befestigen des besagten rohrförmigen Elements (4) an der besagten Hülse (2) in einer vorbestimmten Position entlang der besagten Achse (A);
wobei die besagte Hülse (2) mindestens in der Nähe der besagten Klemme (13) mindestens einen sichtbaren Bereich aufweist, um die externe Sicht auf die Wechselwirkungsposition zwischen dem besagten Rohr (T) und der besagten Klemme (13) während des Montageschritts zu ermöglichen;
wobei die besagten Verriegelungsmittel ein Befestigungselement (5) umfassen, das lösbar mit der besagten Hülse (2) und dem besagten rohrförmigen Element (4) in einer Querrichtung in Bezug auf die besagte Achse (A) gekoppelt werden kann;
wobei das besagte rohrförmige Element (4) und die besagte Hülse (2) entsprechende Eingriffsabschnitte (25, 26) aufweisen, die sich in axialer Richtung gegenseitig durchdringen, und wobei einer (26) der besagten Eingriffsabschnitte (25, 26) transparent ist und der andere (25) der besagten Eingriffsabschnitte (25, 26) mindestens ein Fenster (27) aufweist; wobei der besagte Eingriffsabschnitt (26) der besagten Hülse (2) den besagten sichtbaren Bereich definiert.

2. Die Verbindungsanordnung nach Anspruch 1, wobei die besagte Klemme (13) stromabwärts des besagten Dichtrings (14) in axialer Richtung angeordnet ist, die sich von der besagten Hülse (2) zu dem besagten rohrförmigen Element (4) erstreckt.

3. Die Verbindungsanordnung nach einem der vorhergehenden Ansprüche, wobei die besagte Klemme (13) eine Kegelstumpfform mit dem kleineren Abschnitt aufweist, der auf der gegenüberliegenden Seite in Bezug auf die Seite, auf der das besagte Rohr (T) in die besagte Hülse (2) eingeführt ist, angeordnet ist; wobei die besagte Klemme (13) mit einer Vielzahl von Laschen (16) versehen ist, die gleichmäßig winklig um die besagte Achse (A) herum voneinander beabstandet und zum Klemmen der Außenfläche des besagten Rohres (T) geeignet sind, um dessen Herausziehen aus der besagten Hülse (2) zu verhindern.

4. Die Verbindungsanordnung nach einem der vorhergehenden Ansprüche, wobei die besagte Klemme (13) aus Metall hergestellt ist.

5. Die Verbindungsanordnung nach einem der vorhergehenden Ansprüche, wobei der besagte Eingriffsabschnitt (26) der besagten Hülse (2) radial weiter außen als der besagte Eingriffsabschnitt (25) des besagten rohrförmigen Elements (4) angeordnet ist und ihn intern aufnimmt.

6. Die Verbindungsanordnung nach einem der vorhergehenden Ansprüche, wobei der besagte Eingriffsabschnitt (26) der besagten Hülse (2) transparent ist und der besagte Eingriffsabschnitt (25) des besagten rohrförmigen Elements (4) das besagte Fenster (27) aufweist.

7. Die Verbindungsanordnung nach einem der vorhergehenden Ansprüche, wobei die besagte Hülse (2) vollständig transparent ist.

8. Die Verbindungsanordnung nach einem der vorhergehenden Ansprüche, wobei die besagte Hülse (2) und das besagte rohrförmige Element (4) aus Kunststoff hergestellt sind.

9. Die Verbindungsanordnung nach einem der vorhergehenden Ansprüche, wobei die besagte Hülse (2) koaxial innen einen Ringabstandshalter (15) trägt, der axial zwischen dem besagten Dichtungsring (14) und der besagten Klemme (13) angeordnet ist.

## Revendications

1. Ensemble de connexion (1) pour la connexion d'un tube (T) d'un système de chauffage et/ou de climatisation à un composant tubulaire (V) du même système, ledit ensemble de connexion (1) ayant un axe {A) et comprenant :
- un manchon (2) définissant un siège (3) pour recevoir axialement ledit tube (T) et porter coaxialement à l'intérieur au moins une bague d'étanchéité (14) et une collier de retenue annulaire (13), adaptés pour coopérer en utilisation avec ledit tube (T) pour empêcher que celui-ci sorte du manchon (2) lui-même ;
- un élément tubulaire (4) pouvant être fixé audit composant tubulaire (V) et accouplé axialement en utilisation audit manchon (2) ; et
- des moyens de verrouillage (5) pour fixer ledit élément tubulaire (4) audit manchon (2) dans une position prédéterminée le long dudit axe (A) ;
dans lequel ledit manchon (2) a, au moins dans la proximité dudit collier (13), au moins une zone de visibilité permettant la vision extérieure de la position d'interaction entre ledit tube (T) et ledit collier (13) pendant l'étape d'assemblage ;
dans lequel lesdits moyens de verrouillage comprennent un élément de fixation (5) qui peut être accouplé de manière détachable audit manchon (2) et audit élément tubulaire (4) dans une direction transversale par rapport audit axe (A) ;
dans lequel ledit élément tubulaire (4) et ledit manchon (2) ont des parties d'engagement respectives (25, 26) pénétrant réciproquement les unes dans les autres dans une direction axiale, et dans lequel l'une (26) desdites parties d'engagement (25, 26) est transparente et l'autre (25) desdites parties d'engagement (25, 26) est pourvue d'au moins une fenêtre (27) ; ladite partie d'engagement (26) dudit manchon (2) définissant ladite zone visible.

2. Ensemble de connexion selon la revendication 1, dans lequel ledit collier (13) est placé en aval de ladite bague d'étanchéité (14) dans la direction axiale s'étendant depuis ledit manchon (2) vers ledit élément tubulaire (4).

3. Ensemble de connexion selon l'une quelconque des revendications précédentes, dans lequel ledit collier (13) a une forme de cône tronqué dont la section la plus petite est placée du côté opposé au côté où ledit tube (T) est inséré dans ledit manchon (2) ; ledit collier (13) est pourvu d'une pluralité de languettes (16) régulièrement réparties angulairement les unes par rapport aux autres autour dudit axe (A) et adaptées pour serrer la surface extérieure dudit tube (T) afin d'empêcher que celui-ci sorte dudit manchon (2) .

4. Ensemble de connexion selon l'une quelconque des revendications précédentes, dans lequel ledit collier (13) est en métal.

5. Ensemble de connexion selon l'une quelconque des revendications précédentes, dans lequel ladite partie d'engagement (26) dudit manchon (2) est placée radialement plus à l'extérieur de ladite partie d'engagement (25) dudit élément tubulaire (4) et reçoit celui-ci à l'intérieur.

6. Ensemble de connexion selon l'une quelconque des revendications précédentes, dans lequel ladite partie d'engagement (26) dudit manchon (2) est transparente et ladite partie d'engagement (25) dudit élément tubulaire (4) est pourvue de ladite fenêtre (27).

7. Ensemble de connexion selon l'une quelconque des revendications précédentes, dans lequel ledit manchon (2) est entièrement transparent.

8. Ensemble de connexion selon l'une quelconque des revendications précédentes, dans lequel ledit manchon (2) et ledit élément tubulaire (4) est en matière plastique.

9. Ensemble de connexion selon l'une quelconque des revendications précédentes, dans lequel ledit manchon (2) portant coaxialement à l'intérieur un élément d'espacement annulaire (15) interposée axialement entre ladite bague d'étanchéité (14) et ledit collier (13).
